# EUROPEAN PATENT APPLICATION

(11) **EP 1 174 704 A2**
(43) Date of publication of application: **23.01.2002**
(21) Application number: 01420163.6
(22) Date of filing: 19.07.2001
(51) Int. Cl.: G01N 3/08, G01N 3/10

(54) **Device and process for measurement of foam compression recovery**

(30) Priority: 21.07.2000 US 219838 P; 08.06.2001 US 877408
(71) Applicant: WORLD PROPERTIES, INC., Lincolnwood, Illinois 60646 (US)
(72) Inventor: Arimond, John, Brooklyn, CT 06234 (US); Ambrogi, John, Oneco, CT 06373 (US); Creegan, Tim, Plainfield, CT 06374 (US)
(74) Representative: Bratel, Gérard

(57) **Abstract**

A device for measuring the rate of recovery of a foam sample under compression includes a compression surface engageable with the foam sample and a displacement transducer disposed in mechanical communication with the compression surface. A process of measuring the rate of recovery of the foam sample under compression includes exerting a compressive force on the foam sample such that the foam sample is compressed by a predetermined percentage of its thickness, releasing the compressive force, and measuring the thickness versus time of the recovering foam sample as it returns to its pre-deformed state.

## Description

### CROSS REFERENCE TO RELATED APPLICATION

This application is based on, and claims the benefit of United States Provisional Patent Application No. 60/219,838, filed July 21, 2000, the disclosures of which are herein incorporated by reference in their entirety.

### TECHNICAL FIELD

This invention relates to expandable foams, and, more particularly, to a device and a process for measuring and quantifying the recovery rate of compression of the expandable foam.

### BACKGROUND

Foamed materials are generally made from silicones, polyurethanes, and polyolefin-based resins and mixtures of resins, such as polyethylenes, polypropylenes, and polystyrenes. These foamed resins have varying degrees of impact resistance, as well as varying degrees of elastic deformability, which make them attractive for use in a variety of consumer and industrial applications. A user generally finds a certain "feel" of the foamed material to be desirable and well suited to, for example, use in earplugs, product packaging, and furniture cushioning. One of the factors which contributes to the "feel" and other characteristics of the foam is the rate at which the foams recover from a compressive force. A method and apparatus that compresses a foam sample with precision and accuracy and automatically measures the recovery rate of the foam sample is accordingly needed in the art.

### BRIEF SUMMARY

A device and process for measurement of foam compression recovery are disclosed herein. The device for measuring the rate of recovery of a foam sample under compression includes a compression surface engageable with the foam sample and a displacement transducer disposed in mechanical communication with the compression surface. The process of measuring the rate of recovery of a foam sample under compression includes exerting a compressive force on the foam sample such that the foam sample is compressed by a predetermined percentage of its thickness, releasing the compressive force, and measuring the thickness versus time of the recovering foam sample as it returns to its pre-deformed state. The above-described features and other features and advantages of the invention will be appreciated and understood by those skilled in the art from the following detailed description, drawings, and appended claims.

### BRIEF DESCRIPTION OF THE DRAWINGS

The present invention will now be described by way of example with reference to the following Figures, which are meant to be exemplary, not limiting, in which:
Figure 1 is an exploded perspective view of a device for measuring the rate of recovery from the compression of a foam sample.
Figure 2 is a perspective view of the device for measuring the rate of recovery from the compression of a foam sample.
Figure 3 is a perspective view of a yoke arrangement, a linear variable differential transformer, and a sample mount of the device for measuring the rate of recovery from the compression of a foam sample.

### DETAILED DESCRIPTION

A device for automatically measuring the rate of recovery from the compression of a foam sample is described. In the device, foam samples are compressed between a support surface and a compression surface. The support surface rests on a stack of gage blocks, which shim the foam sample to the proper elevation and enable speedy and accurate setup of the apparatus between test runs. A face of the compression surface engages the foam sample resting on the support surface, while an opposing face of the compression surface supports the lightweight core of a displacement measuring device. One advantage of such a configuration is that the compression remains uniform over the surface area of the foam sample, which, in turn, enables more accurate measurement of the recovery rate of the foam.

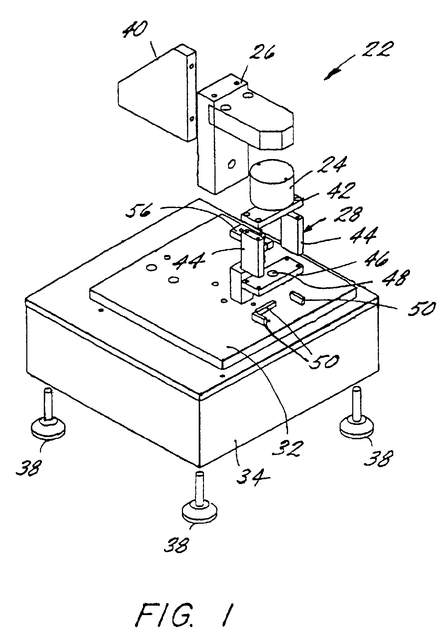

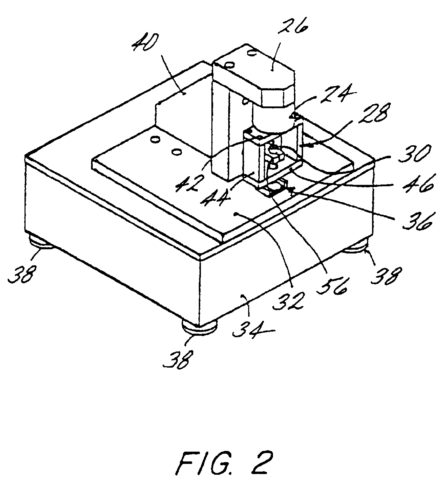

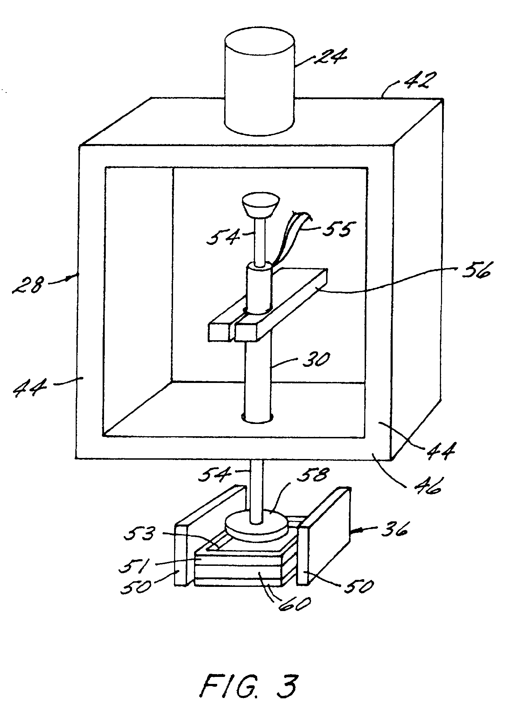

Referring to Figures 1 and 2, an exemplary embodiment of a rate recovery measuring device is shown generally at 22. Rate recovery measuring device 22, which is hereinafter referred to as "device 22," comprises a press cylinder 24 supported by a support member 26, a yoke arrangement, shown generally at 28, extendably supported by press cylinder 24, a displacement transducer fixed to a support arm 56 extending from support member 26, and a compression surface (shown below with reference to Figure 3), which is mechanically cooperative with the movable core of the displacement transducer. The displacement transducer is a linear variable differential transformer, shown at 30, and is hereinafter referred to as LVDT 30. The LVDT 30 includes a movable inner core 54 positioned within the body of LVDT 30. Primary and secondary coils (not shown) associated with core 54 and LVDT 30 are connected in a series-opposing circuit. Movement of core 54 within the body of LVDT 30 in response to the recovery of a foam sample induces a voltage across the coils to provide a data output. Device 22 is mounted on a base plate 32, which is supported by an enclosure 34, which houses the electrical, electronic, and pneumatic controls for the device. A sample mount, shown generally at 36 in Figure 2, is disposed on base plate 32 and is configured to receive and retain a foam sample therein, as will be described below. Enclosure 34 includes rubber feet 38 or the like, which can support enclosure 34 on a level surface such as a table or laboratory bench top. A brace 40 may also be positioned between support member 26 and base plate 32 in order to lend support to device 22 during its operation.

Support member 26 is configured such that a first end thereof is connected to base plate 32 and a second opposing end thereof is positioned substantially perpendicular to base plate 32. Press cylinder 24 is connected to the opposing end of support member 26 and provides a means for effectuating the operation of device 22, which is a pneumatic system that allows for simple construction and rapid response time of the system. Other mechanisms (not shown) that use linkages or cams that are actuated manually, hydraulically, or by an electric motor may also be used.

Yoke arrangement 28 is extendably supported by press cylinder 24 and comprises a plurality of members that form an open frame-like structure. Yoke arrangement 28 comprises a top cross member 42, which is connected to press cylinder 24 at a point intermediate the ends thereof, two side members 44, each of which depend from the ends of top cross member 42, and a bottom cross member 46 connected to side members 44 to form the frame-like structure. A hole 48, which can be seen in Figure 1, is drilled or formed in bottom cross member 46 intermediate the ends thereof to accommodate a displacement measuring device (shown below with reference to Figure 3).

Sample mount 36, as can be best seen in Figure 2, comprises a plurality of retaining members 50 fixedly mounted on base plate 32 and positioned to be engagable by yoke arrangement 28. A throne 51, shown in Figure 3, provides a surface upon which a foam sample rests. Referring to Figure 3, the mechanical cooperation between LVDT 30, yoke arrangement 28, and a core 54 of LVDT 30 is illustrated. Support arm 56 is fixedly positioned on support member 26 and extends into the open space defined by the frame-like structure of yoke arrangement 28 to support LVDT 30. The LVDT 30 is cooperably connected to a computer (not shown) through a wiring harness 55. The collection of data by LVDT 30 and analysis of the data by the computer may be used to present a determination of the recovery rate of the foam sample.

The operation of device 22 begins with the proper placement of the foam sample on sample mount 36. The foam sample is cut to correspond to the shape and dimensions of the surface area of a compression surface, which comprises a circular plate 58 about one inch in diameter. The thickness of the foam sample is irrelevant for the purposes of the determination of the foam recovery rate; however, the thickness of the sample should be such that device 22 can compress the sample a suitable distance and obtain an accurate determination of the foam recovery rate. Preferably, the thickness of the foam sample is between 0.020 inch and 0.500 inch, with a range of 0.125 inch to 0.250 inch being preferred. The foam sample is placed on throne 51 between retaining members 50 and atop gage blocks 60, which can be inserted beneath throne 51 in order to shim the foam sample up so that the foam sample extends partially above the top edge of retaining members 50. A retaining lip 53 is positioned around the perimeter of the surface of the throne 51 upon which the foam sample rests in order to ensure the proper seating of the foam sample on throne 51.

To measure the foam recovery rate, yoke arrangement 28, being powered by press cylinder 24, translates in the direction of the foam sample. As bottom cross member 46 of yoke arrangement 28 contacts the top surface of plate 58, plate 58 is biased in the direction of the foam sample, and LVDT core 54 extends from LVDT 30. The foam sample is thus compressed between plate 58 and throne 51 until bottom cross member 46 extends a great enough distance such that it engages the top edges of retaining members 50, at which point the desired compression (about 50%) is accurately achieved within 0.001 inch by virtue of the correct selection of the gage blocks 60. After holding the foam sample under a controlled percent compression for a controlled duration, cylinder 24 then reverses the direction of yoke arrangement 28, thereby releasing the pressure exerted by yoke arrangement 28 on plate 58.

Upon the reversal of the direction of yoke arrangement 28, the foam sample is free to recover from its compressed state, lifting the lightweight plate 58 and LVDT core 54 with it, the transduced position of LVDT core 54 thereby providing the aforementioned displacement measurement.

While preferred embodiments have been shown and described, various modifications and substitutions may be made thereto without departing from the spirit and scope of the invention. Accordingly, it is to be understood that the present invention has been described by way of illustration and not limitation.

## Claims

1. A device for measuring the rate of recovery of a foam sample under compression, comprising:
a compression surface, said compression surface being engageable with said foam sample; and
a displacement transducer in mechanical communication with said compression surface.

2. The device of claim 1 wherein said compression surface is a plate.

3. The device of claim 2 wherein a face of said plate directly contacts said foam sample.

4. The device of claim 3 wherein a moveable core of said displacement transducer rests atop said plate.

5. The device of claim 1 wherein the loading of said foam sample is in response to the engagement of said compression surface with said foam sample and is caused by direct contact of a yoke arrangement and a surface opposing said compression surface.

6. The device of claim 5 wherein said yoke arrangement is operably connected to a press cylinder and is configured to be powered by said press cylinder.

7. The device of claim 6 wherein said press cylinder is configured to operate pneumatically or hydraulically, to bias said yoke arrangement in the direction of said foam sample.

8. The device of claim 1 wherein said displacement transducer is a linear variable differential transformer,

9. A foam compression measurement device, comprising:
means for compressing a foam sample; and
means for measuring a rate at which said foam sample recovers to its pre-compressed state.

10. The foam compression measurement device of claim 9 wherein said means for compressing said foam sample is a compression surface mechanically cooperable with said means for measuring said rate at which said foam sample recovers to its pre-compressed state.

11. The foam compression measurement device of claim 9 wherein said means for measuring the rate at which said foam sample recovers to its pre-compressed state is a displacement transducer.

12. The foam compression measurement device of claim 11 wherein said means for compressing said foam sample is a compression surface mechanically cooperable with a movable core of said displacement transducer.

13. The foam compression measurement device of claim 11 wherein said displacement transducer is a linear variable differential transformer.

14. A method of measuring the rate of recovery of a foam sample under compression, comprising:
exerting a compressive force on said foam sample such that said foam sample is compressed by a predetermined percentage of its thickness;
releasing said compressive force; and
measuring the thickness versus time of the recovering foam sample as it returns to its pre-deformed state.

15. The method of claim 14 wherein said compressing of said foam sample is achieved with a compressive surface exerted by a yoke arrangement.
